# EUROPÄISCHE PATENTANMELDUNG

(11) **EP 1 754 837 A2**
(43) Veröffentlichungstag der Anmeldung: **21.02.2007**
(21) Anmeldenummer: 06015870.6
(22) Anmeldetag: 31.07.2006
(51) Int. Cl.: E03C 1/04

(54) **Sanitärarmatur**

(30) Priorität: 17.08.2005 DE 102005038842
(71) Anmelder: HANSA METALLWERKE AG, 70567 Stuttgart (DE)
(72) Erfinder: Harsch, Martin, 74395 Mundelsheim (DE)
(74) Vertreter: Ostertag, Ulrich

(57) **Zusammenfassung**

Es wird eine Sanitärarmatur (1) mit einem gegossenen Gehäuse (3), mit einem Wasserauslauf (5) und mit wenigstens einem wasserführenden Bereich (11, 17, 19) beschrieben. Das Wasserauslaufgehäuse (3) und/oder der Wasserauslauf (5) weist wenigstens einen Hohlraum (21) auf, der zu Zwecken des Gießens eine Verbindungsöffnung (25) zu einem wasserführenden Bereich (17) aufweist, die nachträglich mit einem Abdichtmittel (29) verschlossen ist.

## Beschreibung

Die Erfindung betrifft eine Sanitärarmatur mit einem gegossenen Gehäuse, mit einem Wasserauslauf und mit wenigstens einem wasserführenden Bereich.

Bei bekannten Sanitärarmaturen sind häufig insbesondere aus ästhetischen Gründen die Wasserauslaufgehäuse und/oder die Wasserausläufe sehr voluminös ausgestaltet. Diese Bauteile sind hierdurch entsprechend schwer und wegen des großen Materialbedarfs auch teuer.

Aufgabe der vorliegenden Erfindung ist es, eine Sanitärarmatur der eingangs genannten Art zu gestalten, die technisch einfach mit möglichst geringem Materialaufwand herstellbar ist und die ein optisch ansprechendes Design aufweist.

Diese Aufgabe wird erfindungsgemäß dadurch gelöst, dass das Wasserauslaufgehäuse und/oder der Wasserauslauf wenigstens einen Hohlraum aufweist, der zu Zwecken des Gießens eine Verbindungsöffnung zu einem wasserführenden Bereich aufweist, und nachträglich mit einem Abdichtmittel verschlossen ist.

Erfindungsgemäß sind also insbesondere voluminöse Bauteile wenigstens zum Teil hohl, wodurch Material eingespart wird. Hierdurch werden sowohl das Gewicht des entsprechenden Bauteils reduziert als auch die Kosten insbesondere für dem Materialbedarf deutlich verringert. Mit dem Abdichtmittel sind insbesondere herstellungsbedingte Öffnungen des Hohlraums abdichtbar, wodurch verhindert wird, dass in diesen Wasser insbesondere aus dem wasserführenden Bereich eindringen kann. Der Hohlraum bleibt also wasserlos. Das Wasservolumen in der Sanitärarmatur ist also begrenzt auf die Wassermenge, die sich in den funktionell erforderlichen wasserführenden Bereichen befindet. Insgesamt ist auf diese Weise eine schnelle Durchspülung der Sanitärarmatur möglich. Im Übrigen ist so auch weniger Standwasser, welches selten oder gar nicht umgewälzt wird, in der Sanitärarmatur.

Bei einer besonders vorteilhaften Ausführungsform kann das Abdichtmittel ein entfernbarer Abdichtstopfen sein, der einfach herstellbar, montierbar und gegebenenfalls leicht wieder entfernbar ist.

Zweckmäßigerweise kann das Abdichtmittel eine beim Gießen als Kernlager dienende Öffnung abdichten.

Vorteilhafterweise kann das Wasserauslaufgehäuse und/oder der Wasserauslauf aus Messingguss sein. Messing ist gut verarbeitbar, sehr korrosionsbeständig und besitzt günstige Festigkeitseigenschaften.

Optisch besonders ansprechend ist eine weitere vorteilhafte Ausführungsform, bei der der wasserführende Bereich des Wasserauslaufs nach oben hin offen sein kann.

Ausführungsbeispiele der Erfindung werden nachfolgend anhand der Zeichnung näher erläutert; es zeigen
- Figur 1: schematisch einen Längsschnitt einer Sanitärarmatur, bei der eine Verbindungsöffnung zwischen einen wasserführenden Bereich im Wasserauslaufgehäuse und einem wasserlosen Hohlraum im Wasserauslauf mit einem Abdichtstopfen abgedichtet ist;
- Figur 2: eine Detailansicht des Wasserauslaufs der Sanitärarmatur aus Figur 1.

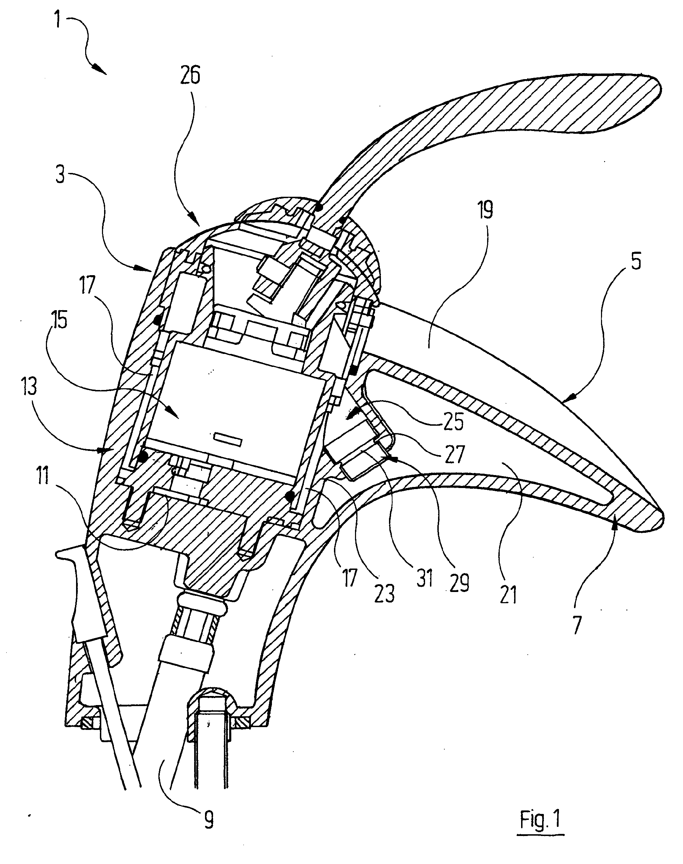

In Figur 1 ist eine insgesamt mit dem Bezugszeichen 1 versehene Sanitärarmatur mit einem Wasserauslaufgehäuse 3 und einem rechts an dieses anschließenden Wasserauslauf 5 dargestellt. Ein Wasserauslaufbodenkörper 7 im in Figur 1 unteren Bereich des Wasserauslaufs 5 ist aus ästhetischen Gründen voluminös ausgestaltet. Das Wasserauslaufgehäuse 3 und der Wasserauslauf 5 sind einstückig aus Messing gegossen.

In das Wasserauslaufgehäuse 3 führen von unten zwei Wasserzuleitungen 9, von denen nur einer erkennbar ist. Die Wasserzuleitungen 9 münden in den Boden einer hohlzylinderförmigen Kartuschenaufnahme 13 und kommunizieren auch mit Wasserzulauföffnungen im Boden einer darin angeordneten Kartusche 15. Eine ebenfalls im Boden der Kartusche 15 angeordnete Mischwasserauslassöffnung kommuniziert mit einem wasserführenden Radialraum 11 zwischen dem Boden der Kartuschenaufnahme 13 und dem Boden der Kartusche 15. An den Radialraum 11 schließt sich in Figur 1 nach oben ein wasserführender Ringraum 17 zwischen der Innenwand der Kartuschenaufnahme 13 und der Außenwand der Kartusche 15 an. Der Ringraum 17 ist in Figur 1 oben rechts zu einer U-förmigem, oben offenen Wasserrinne 19 des Wasserauslaufs 5 hin geöffnet. Die Wasserrinne 19 befindet sich oben auf dem Wasserauslaufbodenkörper 7.

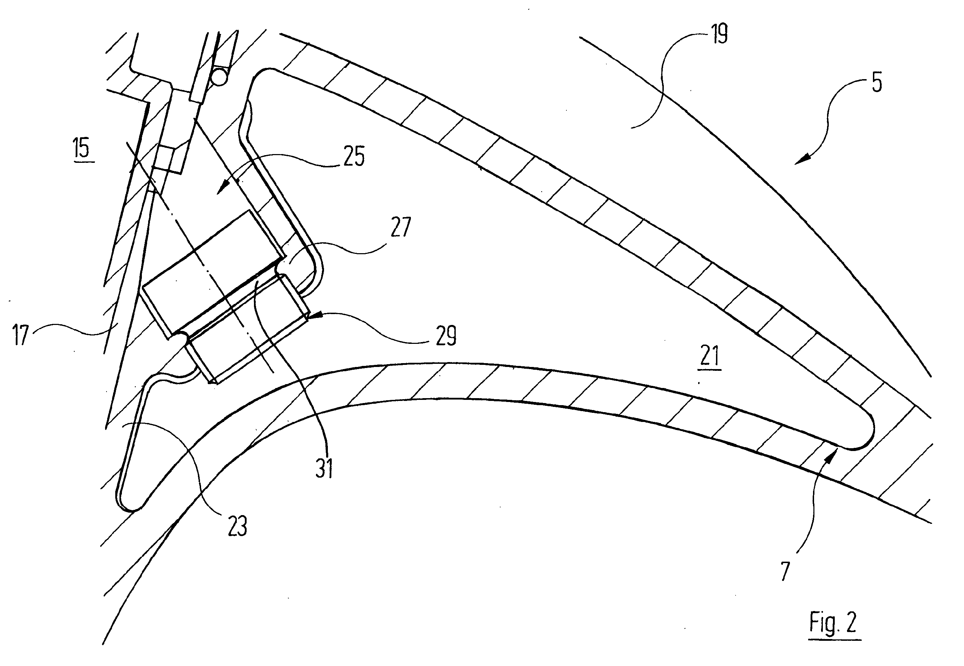

Der Wasserauslaufbodenkörper 7 weist in Figur 1 unterhalb der Wasserrinne 19 einen in Figur 2 im Detail gezeigten Hohlraum 21 auf. Der Hohlraum 21 erstreckt sich nahezu über das gesamte Volumen des Wasserauslaufbodenkörpers 7, so dass eine deutliche Materialeinsparung gegenüber einem massiven Wasserauslaufbodenkörper ohne einen solchen Hohlraum erzielt wird.

Der Hohlraum 21 ist mit einer Wand 23 auf seiner dem Wasserauslaufgehäuse 3 zugewandten Seite, in Figuren 1 und 2 links, von dem angrenzenden wasserführenden Ringraum 17 getrennt. Die Wand 23 weist etwa in ihrem Zentrum einen sich einstückig an ihre dem Hohlraum 21 zugewandte Innenfläche anschließenden, im Wesentlichen hohlzylinderförmigen, durchgängig offenen, Stutzen 25 auf, der schräg, in Figuren 1 und 2 von links oben nach rechts unten, in den Hohlraum 21 hineinragt. Der Stutzen 25 verbindet den Hohlraum 21 mit dem Ringraum 17 des Wasserauslaufgehäuses 3. Er entspricht beim Gießen der Sanitärarmatur 1 einem Kernlager eines zur Herstellung des Hohlraums 21 erforderlichen Kerns. Die Achse des Stutzens 25 ist um etwa 50° gegen die Achse der Kartuschenaufnahme 13 geneigt, so dass der Stutzen 25 bei nicht eingesetzter Kartusche 15 und einem geöffneten Deckel 26 des Wasserauslaufgehäuses 3, in Figur 1 oben, von dort aus leicht zugängig ist. Etwas vor der dem Hohlraum 21 zugewandten Stirnseite des Stutzens 25 weist dessen Innenmantel einen umlaufenden Kragen 27 auf. Der Innendurchmesser des Stutzens 25 auf der dem Wasserauslaufgehäuse 3 zugewandten Seite des Kragens 27 ist etwas größer als sein Innendurchmesser auf der dem Hohlraum 21 zugewandten Seite.

In der dem Hohlraum 21 zugewandten Stirnseite des Stutzens 25 ist ein im Wesentlichen zylinderförmiger Abdichtstopfen 29 aus elastischem Material angeordnet. Mit dem Abdichtstopfen 29 ist der Stutzen 25 verschlossen, so dass kein Wasser aus dem Ringraum 17 in den Hohlraum 21 eindringen kann und letzterer wasserlos ist.

Der Mantel des Abdichtstopfens 29 weist in axialer Richtung betrachtet etwa mittig eine umlaufende Ringnut 31 auf, in die der Kragen 27 des Stutzens 25 eingreift und so den Abdichtstopfen 29 fixiert. Der Außendurchmesser des Abdichtstopfens 29 auf seiner dem Hohlraum 21 zugewandten Seite entspricht etwa dem Innendurchmesser des Stutzens 25 dort. Auf seiner dem Wasserauslaufgehäuse 3 zugewandten Seite entspricht sein etwas größerer Außendurchmesser dem dortigen Innendurchmesser des Stutzens 25. Durch den vergrößerten Außendurchmesser des Abdichtstopfens 29 auf seiner dem Hohlraum 21 abgewandten Seite wird verhindert, dass dieser in den Hohlraum 21 rutscht.

Zur Herstellung der Sanitärarmatur 1 wird zunächst das Wasserauslaufgehäuse 3 zusammen mit dem Wasserauslaufbodenkörper 7 aus Messing gegossen. Hierbei wird ein Kern für den Hohlraum 21 im Wasserauslaufbodenkörper 7 verwendet, um dessen Kernlager sich der Stutzen 25 bildet. Nach dem Gießvorgang wird der Kern entfernt und der Gießkörper in bekannter Weise zum fertigen Armaturengehäuse weiter bearbeitet. Abschließend wird der Abdichtstopfen 29 in Figur 1 von oben durch die Kartuschenaufnahme 13 in den Stutzen 25 gesteckt und auf diese Weise der Hohlraum 21 gegenüber der Kartuschenaufnahme 13, insbesondere dem Ringraum 17, verschlossen. Zum Schluss werden die Kartusche 15 und der Deckel 26 in bekannter Weise eingesetzt.

Beim Betrieb der Sanitärarmatur 1 fließt das Wasser aus der Wasserzuleitung 9 durch den Radialraum 11 und den Ringraum 17 zur Wasserrinne 19 des Wasserauslaufs 5. Da der Stutzen 25 mit dem Abdichtstopfen 29 verschlossen ist, kann in den Hohlraum 21 des Wasserauslaufbodenkörpers 7 kein Wasser eindringen.

Zusätzlich oder anstelle des Wasserauslaufbodenkörpers 7 kann auch das Wasserauslaufgehäuse 3 einen wasserlosen Hohlraum 21 aufweisen, der in ähnlicher Weise durch einen Stopfen gegen das Eindringen von Wasser geschützt ist.

Das Wasserauslaufgehäuse 3 und der Wasserauslauf 5 können statt aus Messingguss auch aus einem anderen für sanitäre Zwecke geeigneten Material sein.

Der wasserführende Bereich des Wasserauslaufs 5 kann statt in Form einer nach oben hin offenen Wasserrinne 19 auch in einer anderen Art ausgebildet sein. Es kann beispielsweise auch ein rundum geschlossener Wasserkanal realisiert sein.

Die Öffnung des wasserlosen Hohlraums 21 kann statt als Stutzen 25 auch in einer anderen Weise realisiert sein. Beispielsweise kann auch lediglich eine durchgängige Bohrung in der Wand 23 vorgesehen sein.

Anstelle des entfernbaren Abdichtstopfens 29 kann auch ein andersartiges Abdichtmittel, beispielsweise ein einschraubbarer Stopfen, ein einklebbarer Stopfen oder ein löt- oder schweißbares Abdichtmittel, verwendet werden. Das Abdichtmittel muss auch nicht notwendigerweise wieder entfernbar sein.

## Patentansprüche

1. Sanitärarmatur mit einem gegossenen Gehäuse, mit
einem Wasserauslauf und mit wenigstens einem wasserführenden Bereich,
**dadurch gekennzeichnet, dass**
das Wasserauslaufgehäuse (3) und/oder der Wasserauslauf (5) wenigstens einen Hohlraum (21) aufweist, der zu Zwekken des Gießens eine Verbindungsöffnung (25) zu einem wasserführenden Bereich (17) aufweist, die nachträglich mit einem Abdichtmittel (29) verschlossen ist.

2. Sanitärarmatur nach Anspruch 1, **dadurch gekennzeichnet, dass** das Abdichtmittel ein entfernbarer Abdichtstopfen (29) ist.

3. Sanitärarmatur nach Anspruch 1 oder 2, **dadurch gekennzeichnet, dass** das Abdichtmittel (29) eine beim Gießen als Kernlager dienende Öffnung (25) abdichtet.

4. Sanitärarmatur nach einem der vorhergehenden Ansprüche, **dadurch gekennzeichnet, dass** das Wasser-auslaufgehäuse (3) und/oder der Wasserauslauf (5) aus Messingguss ist.

5. Sanitärarmatur nach einem der vorhergehenden Ansprüche, **dadurch gekennzeichnet, dass** der wasserführende Bereich (19) des Wasserauslaufs (5) nach oben hin offen ist.
